(19) Europäisches Patentamt
European Patent Office
Office européen des brevets

(11) Publication number : 0 463 773 B1

(12) EUROPEAN PATENT SPECIFICATION

(45) Date of publication of patent specification : 08.09.93 Bulletin 93/36

(21) Application number : 91305360.9

(22) Date of filing : 13.06.91

(51) Int. Cl.$^5$ : C10M 169/04, C09K 5/04, // (C10M169/04, 105:52, 107:34, 129:18), (C10N20/02, 40:30)

# (54) Refrigerator oil.

(30) Priority : 22.06.90 JP 164431/90

(43) Date of publication of application : 02.01.92 Bulletin 92/01

(45) Publication of the grant of the patent : 08.09.93 Bulletin 93/36

(84) Designated Contracting States : AT BE CH DE DK ES FR GB GR IT LI LU NL SE

(56) References cited :
EP-A- 0 386 851
US-A- 4 900 463
US-A- 4 948 525
WORLD PATENTS INDEX LATEST Section Ch, Week 8949, Derwent Publications Ltd., London, GB; Class A, AN 89-361192
WORLD PATENTS INDEX LATEST Section Ch, Week 8652, Derwent Publications Ltd., London, GB; Class E, AN 86-342476

(73) Proprietor : ASAHI DENKA KOGYO KABUSHIKI KAISHA
2-35, Higashiogu 7-chome
Arakawa-ku Tokyo 116 (JP)

(72) Inventor : Kamakura, Tamiji
875-3, Kunugi, Fujishirocho
Kitasouma-gun, Ibaraki (JP)
Inventor : Tanaka, Noriyoshi
The States Shiki 314, 29-10, Mihara 3 chome
Asaka-shi, Saitama (JP)
Inventor : Namiwa, Kimiyoshi
Asahiryo, 46-21, Higashiogu 8-chome
Arakawa-ku, Tokyo (JP)
Inventor : TATSUMU, Yukio
Asahi Matsudo mansion 226,
705-1, Koyama, Matsudo-shi, Chiba (JP)
Inventor : NAMIKI, Masato
Asahiryo, 46-21, Higashiogu
8-chome, Arakawa-ku, Tokyo (JP)

(74) Representative : Taylor, Phillip Kenneth et al
W.P. THOMPSON & CO. Coopers Building
Church Street
Liverpool L1 3AB (GB)

EP 0 463 773 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to a refrigerator oil and more particularly to a refrigerator oil for a refrigerator using a chlorine-free fluorocarbon refrigerant such as Flon-134a (1,1,1,2-tetrafluoroethane).

Being excellent in chemical stability, low toxicity, non-combustibility, etc., chlorofluorocarbon compounds have been widely used in the field of refrigerant, aerosol, foaming agent, detergent, etc.

It has been believed in recent years, however, that the chlorofluorocarbon compounds that are released into the atmosphere destroy the ozone layer in the stratosphere, thus making themselves responsible for the warming of the Earth's atmosphere, the so-called greenhouse effect. Under these circumstances, the tendency of reducing the production and consumption of some specified chlorofluorocarbon compounds has been enhanced.

Accordingly, the development of fluorocarbon compounds that are free from the possibility of destroying the ozone layer or causing the greenhouse effect, that is, do not contain any chlorine atom in the molecule and are capable of being relatively readily decomposed is in progress.

In such circumstances, Flon-134a which is similar to Flon-12 (dichlorodifluoromethane) in physical properties has been developed in place of Flon-12 which has been widely used as a refrigerant for household refrigerators, air conditioners, small-sized refrigerators for business use, air conditioners for automotive cars, etc.

However, Flon-134a not containing chlorine atom in the molecular greatly differs from the fluorocarbon compounds containing chlorine atoms in the molecule such as Flon-12 or Flon 22 (monochlorodifluoromethanol) with respect to solubility. Thus, Flon-134a is poor in compatibility with naphthene-base mineral oils and alkylbenzenes that have heretofore been used as refrigerator oils, resulting in such troubles as deteriorated oil return in an evaporator, seizure of compressor parts or abnormal vibration. Hence, the development of a refrigerator oil which is sufficiently compatible with the above-mentioned oils is required.

A refrigerator oils for Flon-134a is disclosed in US-A 4 755 316, which is involved in a high hygroscopicity and inadvantageously introduces some moisture to decompose fluorocarbon, give hydrofluoric acid and cause corrosion on metal.

US-A-4900463 discloses a lubricating composition which comprises a single phase blend of (i) at least one polyoxyalkylene glycol which has a molecular weight between 300 and 2000, a viscosity of about 10-157 $mm^2/s$ (centistokes) at 37°C., and a viscosity index of at least 20 and (ii) a chlorotrifluroethylene oil having a viscosity of about 0.8-1000 $mm^2/s$ (centistokes) at 25°C. In order to avoid the chlorotrifluroethylene oil becoming unstable when exposed to aluminum, a stabilizer for the chlorotrifluroethylene oil is preferably added, which stabilizer may be a phosphite ester, an organotin compound or an epoxy compound such as 1,4-butanediol diglycidal ether.

A purpose of the present invention solve the corrosion problem caused by hydrofluoric acid which is formed by the incorporated moisture and at the same time to provide a satisfactory polyoxyalkylene glycol ether-based refrigerator oil which can be used for a wide range of application.

In order to solve the above-mentioned problem, the present inventors have intensively investigated polyoxyalkylene glycol ether-based refrigerator oil and finally accomplished the present invention.

The refrigerator oil according to the present invention is characterised in that it is free of chlorine-containing fluorocarbon refrigerants and in that it comprises a polyoxyalkylene glycol ether represented by the general formula:

$$R_1O(AO)_nR_2 \qquad (I)$$

wherein AO is one or more groups selected from the group consisting of

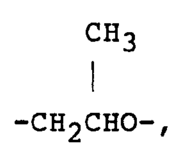

$-CH_2CH_2O-$ and $-CH_2O-$ and, in the case of two or more groups, they may together form a block copolymer or a random copolymer: n = p + q + r in which p is the average number of the groups represented by

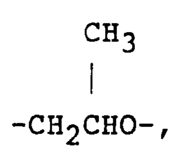

q is the average number of the groups represented by $-CH_2CH_2O-$, r is the average number of the groups represented by $-CH_2O-$, p is in the range of 1 to 80, q is in the range of 0 to 60, r is 0 or 1 and the relation $0 \leqq q/(p+q) \leqq 0.6$ holds; and $R_1$ and $R_2$ are each a hydrogen atom or a hydrocarbon radical having 1 to 8 carbon atoms provided that both $R_1$ and $R_2$ are not hydrogen atoms, and having a kinematic viscosity at 40°C in the range of 6 to 500 $mm^2/s$ (cSt); and 0.01 to 25 parts by weight, based on 100 parts by weight of said polyoxyalkylene glycol ether, of a polyglycidyl ether compound prepared from a dihydric or trihydric alcohol.

The invention further provides a refrigerator oil lubricant composition characterised in that it is free of chlorine containing fluorocarbon refrigerants and in that it comprises (a) a polyoxyalkylene glycol ether having the formula (I) and having a kinematic viscosity at 40 degree C in the range of 6 to 500 $mm^2/s$ cSt and (b) 0.01 to 25 parts by weight, based on 100 parts by weight of (a), of a polyglycidyl ether compound derived from a dihydric or trihydric alcohol. It is preferable that R1 and R2 are each independently selected from methyl, ethyl, 1-propyl, 1-butyl and 2-methyl-1-propyl; the kinematic viscosity of (a) ranges from 10 to 200 cSt. ($mm^2/s$) at 40°C; and a carbon number ratio of the alcohol part to the glycidyl ether part is 1.5 or more.

The invention moreover provides a refrigerator oil composition characterised in that it is free of chlorine containing fluorocarbon refrigerants and in that it comprises a fluorocarbon-based refrigerant containing no chlorine and the lubricant composition as defined above at a weight ratio of 1:99 to 99:1.

In the polyoxyalkylene glycol ether represented by the general formula (I) to be used in the present invention, when two or more groups are included in $(AO)_n$, they may together form a block copolymer or a random copolymer, and the permutation of each group in the block copolymer is arbitrary.

The refrigerator oil which does not satisfy any or all of the conditions with regard to p, q and r in the general formula (I) brings about separation of the oil from Flon-134a between -50°C and 60°C, that is, the actual working temperature range of the refrigerator oil, resulting in various troubles. The preferred values of p and q are those simultaneously satisfying the relations $5 \leqq p \leqq 40$; $0 \leqq q \leqq 15$; and $0 \leqq q/(p+q) \leqq 0.3$.

Further, when $R_1$ and $R_2$ are each a hydrocarbon group having 9 or more carbon atoms, separation of the refrigerator oil from Flon-134a takes place between -50°C and 60°C, that is, the actual working temperature range of the oil, resulting in various troubles.

For example, $R_1$ and $R_2$ independently may each be methyl, ethyl, 1-propyl, 2-propyl, 1-butyl, 2-butyl, 2-methyl-1-propyl, 2-methyl-2-propyl, 1-pentyl, 2-pentyl, 3-pentyl, 2-methyl-1-butyl, 3-methyl-1-butyl, 2-methyl-2-butyl 1-hexyl, 4-methyl-2-pentyl, 2-ethyl-1-butyl, phenyl, 1-heptyl, 2-heptyl, 3-heptyl, 1-octyl, 2-octyl, or 2-ethylhexyl.

Preferably $R_1$ and $R_2$ independently are methyl, ethyl, 1-propyl, 1-butyl, or 2-methyl-1-propyl.

When $R_1$ and $R_2$ are both hydrogen atoms the polyoxyalkylene glycol ether is highly hygroscopic and not suitable for a refrigerator oil.

The polyoxyalkylene glycol ether to be used in the present invention can be obtained by a suitable combination of conventional addition and etherification reactions using alcohols, alkylene oxides, etc., as starting materials.

The polyoxyalkylene glycol ether to be used in the present invention has a kinematic viscosity at 40°C of 6 to 500 $mm^2/s$ cSt, preferably 10 to 200 $mm^2/s$ cSt. A kinematic viscosity at 40°C of less than 6 $mm^2/s$ cSt does not afford sufficient lubricity, whereas that of more than 500 $mm^2/s$ cSt causes not only energy loss due to increase in the compressor load but also oil separation in the refrigerator and deterioration of oil return in the piping.

The polyglycidyl ether compounds prepared from a dihydric or trihydric alcohol are those having a ratio of carbon numbers in a glycidyl ether group to carbon numbers in a dihydric or trihydric alcohol of 1.5 or more. Examples of the polyglycidyl ether compounds prepared from dihydric alcohols include propylene glycol diglycidyl ether, neopentyl glycol diglycidyl ether, 1,4-butanediol diglycidyl ether, polyalkylene glycol diglycidyl ethers, and diglycidyl ethers of bisphenol A/alkylene oxide adducts. Examples of the polyglycidyl ether compounds prepared from trihydric alcohols include trimethylolpropane triglycidyl ether.

The particularly desirable polyglycidyl ethers include neopentyl glycol diglycidyl ether, propylene glycol diglycidyl ether, and polyalkylene glycol diglycidyl ethers. Also a mixture of one or more of these polyglycidyl ether compounds may be used.

The alkylene group which constitutes polyalkylene glycol diglycidyl ethers is preferably an ethylene, propylene or butylene group. The polyalkylene glycol diglycidyl ethers preferably have a molecular weight of 1000 or less for the purpose of effectively exhibiting hydrolytic stability.

On the other hand, the polyglycidyl ether compounds prepared from monohydric or tetrahydric or higher alcohols are poor in the compatibility with Flon-134a and unsuitable as the refrigerator oil.

In addition, the polyglycidyl ether compounds having a ratio of carbon numbers in a glycidyl ether group to carbon numbers in a dihydric or trihydric alcohol of less than 1.5 tend to decrease in their compatibility with Flon-134a and therefore are not desirable as refrigerator oils.

In the present invention, the mixing ratio in parts by weight of the polyglycidyl ether compound prepared from a dihydric or trihydric alcohol to the polyalkylene glycol ether represented by the general formula (I) is 0.01:100 to 25:100, and preferably is 0.5:100 to 5:100.

When the said mixing ratio is less than 0.01: 100 it is impossible to prevent the formation of hydrofluoric acid in the refrigerator oil, whereas when the mixing ratio is more than 25:100 the electrical insulation and lubricating properties of refrigerator oil deteriorate.

Although the refrigerator oil according to the present invention may be composed solely of the abovementioned two effective ingredients, it may further contain one or more known lubricants of a different type. Moreover, known additives for the lubricant of a refrigerator using a fluorocarbon compound as the refrigerant may be used in combination with the present refrigerator oil within the scope of the object of the present invention. Examples of such additives include phosphoric esters such as tricresyl phosphate, phosphorous esters such as triethyl phosphite, organotin compounds such as dibutyltin laurate and antioxidants such as α-naphthylbenzylamine, phenothiazine or BHT.

The refrigerator oil according to the present invention can be favorably used in a refrigerator using chlorine-free fluorocarbon-based refrigerant. Examples of the chlorine-free fluorocarbon-based refrigerants include Flon-134 (1,1,2,2-tetrafluoroethane), Flon-134a, Flon-143 (1,1,2-trifluoroethane), Flon 143a (1,1,1-trifluoroethane), Flon 152 (1,2-difluoroethane), Flon 152a (1,1-difluoroehtane) and mixtures of one or more thereof. Among them, Flon-134a is similar in physical properties to Flon-12 which is generally employed at the present time. Accordingly, the combined use of Flon-134a and the refrigerator oil according to the present invention can achieve a maximum effect in lubricity.

The present invention provides a polyoxyalkylene glycol ether-based refrigerator oil which has solved the corrosion problem due to hydrofluoric acid formed by the incorporated moisture whilst at the same time having utility for a wide range of applications.

Furthermore, the refrigerator oil according to the present invention is completely compatible with a chlorine-free fluorocarbon refrigerant such as Flon-134a substantially in almost all mixing ratios (1:99 to 99:1) at a temperature ranging from -50 to 60°C, that is, the actual working temperature range of a lubricant for a refrigerator.

The present invention will now be described in more detail by reference to the following Examples, though it is not to be regarded as limited thereto.

Examples 1 to 10 and Comparative Examples 1 to 10

Various refrigerator oils were prepared by compounding each component in the compounding ratio as specified in Table 1 by the use of the following Samples 1 to 11.

Sample 1

A polyoxyalkylene glycol ether (random copolymer) having a kinematic viscosity at 40°C of 38 cSt mm²/s as represented by the following formula:

$$C_4H_9O\,(CH_2\overset{\overset{CH_3}{|}}{C}HO)_8\,(CH_2CH_2O)_{11}CH_3$$

Sample 2

A polyoxyalkylene glycol ether (block copolymer) having a kinematic viscosity at 40°C of 160 cSt mm²/s as represented by the following formula:

$$CH_3O\,(CH_2CH_2O)_5\,(CH_2\overset{\overset{CH_3}{|}}{C}HO)_{30}\,(CH_2CH_2O)_5CH_3$$

Sample 3

A polyoxyalkylene glycol ether having a kinematic viscosity at 40°C of 16 cSt $mm^2/s$ as represented by the following formula:

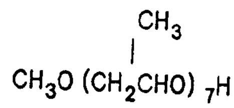

Sample 4

A polyoxyalkylene glycol ether (block copolymer) having a kinematic viscosity at 40°C of 51 cSt $mm^2/s$ as represented by the following formula:

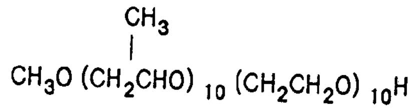

Sample 5

A polyoxyalkylene glycol ether (random copolymer) having a kinematic viscosity at 40°C of 180 cSt $mm^2/s$ as represented by the following formula:

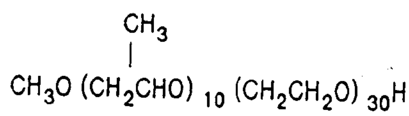

Sample 6

A polyoxyalkylene glycol ether having a kinematic viscosity at 40°C of 73 cSt $mm^2/s$ as represented by the following formula:

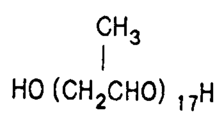

Sample 7

Polypropylene glycol diglycidyl ether (molecular weight: ca. 400).

Sample 8

Neopentyl glycol diglycidyl ether.

Sample 9

Trimethylolpropane triglycidyl ether

<u>Sample 10</u>

Pentaerythritol tetraglycidyl ether.

<u>Sample 11</u>

Ethyl glycidyl ether.

Table 1

| | Polyoxyalkylene glycol ether | Glycidyl ether compound | Content of glycidyl ether compound based on 100 parts by weight of polyoxyalkylene glycol ether (parts by weight) |
|---|---|---|---|
| Ex. 1 | Sample 1 | Sample 7 | 3 |
| Ex. 2 | Sample 2 | Sample 7 | 3 |
| Ex. 3 | Sample 3 | Sample 7 | 3 |
| Ex. 4 | Sample 4 | Sample 7 | 3 |
| Ex. 5 | Sample 1 | Sample 7 | 1 |
| Ex. 6 | Sample 1 | Sample 7 | 5 |
| Ex. 7 | Sample 3 | Sample 8 | 3 |
| Ex. 8 | Sample 3 | Sample 9 | 3 |
| Ex. 9 | Sample 2 | Sample 8 | 0.02 |
| Ex. 10 | Sample 2 | Sample 8 | 20 |
| Comp. Ex. 1 | Sample 1 | — | — |
| Comp. Ex. 2 | Sample 2 | — | — |
| Comp. Ex. 3 | Sample 3 | — | — |
| Comp. Ex. 4 | Sample 4 | — | — |
| Comp. Ex. 5 | Sample 5 | — | — |
| Comp. Ex. 6 | Sample 6 | — | — |
| Comp. Ex. 7 | Sample 1 | Sample 10 | 3 |
| Comp. Ex. 8 | Sample 1 | Sample 11 | 3 |
| Comp. Ex. 9 | Sample 2 | Sample 8 | 0.005 |
| Comp. Ex. 10 | Sample 2 | Sample 8 | 30 |

The refrigerator oils thus obtained were subjected to tests for compatibility with fluorocarbon. stability, hygroscopicity and electrical insulation properties by the following methods and the results are given in Table 2.

Test for compatibility with fluorocarbon

A mixture ① composed of 15 parts by weight of each of the refrigerator oils listed in Table 1 and 85 parts by weight of Flon-134a or a mixture ② composed of 60 parts by weight of each of the refrigerator oils listed in Table 1 and 40 parts by weight of Flon-134a were fed into a 1-ℓ autoclave made of glass and were tested for the compatibility at -50 to 60°C.

Test for stability against hydrolysis

18 parts by weight of each of the refrigerator oils listed in Table 1, 80 parts by weight of Flon-134a and 0.002 parts by weight of water were fed into a 100-mℓ autoclave made of stainless steel (SUS-316), in which were further placed three metal pieces (50 x 25 x 1.5 mm in size) made of steel, copper and aluminum, respectively. The autoclave was hermetically sealed and the contents were heated at 150°C for 14 days (336 hours). After the completion of the heating test, Flon-134a and water were removed by vacuum deaeration and the refrigerator oils were evaluated for viscosity, appearance and acid value. The metal pieces were washed with toluene and ethanol and measured by change in weight.

Test for hygroscopicity

10 g of each of the refrigerator oils listed in Table 1 was fed into a 100-mℓ beaker, which was then placed in a thermohygrostat maintained at 20°C and 60% humidity. Each of the oils was measured for change in weight after 24 hours.

Test for electrical insulation properties

Each of the refrigerator oils listed in Table 1 was measured for volume resistivity, which is usually used as a measure of electrical insulating properties, at a humidity of 70% and a temperature of 30°C by the method using a DC amplifier according to JIS C-2101. Advantest TR-8601 (manufactured by Advantest Corp.) and Advantest TR-44 (manufactured by Advantest Corp.) were used as a microammeter and a liquid resistance measuring cell, respectively, at an impressed voltage of 100 V.

Table 2

| | Test for compatibility with fluorocarbon | | Test for stability against hydrolysis | | | | | | | | | |
|---|---|---|---|---|---|---|---|---|---|---|---|---|
| | ① | ② | viscosity at 40°C (cSt) | | rate of viscosity change (%) | appearance (Gardner) | | acid value (mgKOH/g) | | rate of weight change of metal piece (mg/cm²) | | |
| | | | before test | after test | | before test | after test | before test | after test | steel | copper | aluminum |
| Ex. 1 | completely compatible | compeltely compatible | 38 | 31 | -18 | pale yellow, transparent (1) | yellow, transparent (3) | 0.02 | 0.03 | ±0.00 | ±0.00 | ±0.00 |
| Ex. 2 | " | " | 160 | 142 | -11 | " (1) | " (3) | 0.01 | 0.03 | ±0.00 | ±0.00 | ±0.00 |
| Ex. 3 | " | " | 13 | 11 | -15 | " (1) | " (3) | 0.02 | 0.04 | ±0.00 | ±0.00 | ±0.00 |
| Ex. 4 | " | " | 51 | 46 | -10 | " (1) | " (3) | 0.02 | 0.03 | ±0.00 | ±0.00 | ±0.00 |
| Ex. 5 | " | " | 38 | 29 | -24 | " (1) | " (3) | 0.02 | 0.03 | ±0.00 | ±0.00 | ±0.00 |
| Ex. 6 | " | " | 39 | 34 | -15 | " (1) | " (4) | 0.02 | 0.08 | ±0.00 | ±0.00 | ±0.00 |
| Ex. 7 | " | " | 12 | 9 | -25 | " (1) | " (3) | 0.02 | 0.03 | ±0.00 | ±0.00 | ±0.00 |
| Ex. 8 | " | " | 12 | 9 | -25 | " (1) | " (3) | 0.02 | 0.05 | ±0.00 | ±0.00 | ±0.00 |
| Ex. 9 | " | " | 160 | 108 | -33 | " (1) | " (4) | 0.02 | 0.09 | -0.03 | -0.01 | -0.01 |
| Ex. 10 | " | " | 160 | 149 | - 7 | " (1) | " (5) | 0.01 | 0.20 | -0.09 | -0.06 | -0.01 |
| | | | | | | | " (2) | 0.01 | 0.02 | ±0.00 | ±0.00 | ±0.00 |
| Comp. Ex. 1 | completely compatible | completely compatible | 38 | 17 | -55 | pale yellow, transparent (1) | brown, transparent (8) | 0.02 | 0.72 | -4.0 | -0.9 | -0.6 |
| Comp. Ex. 2 | " | " | 160 | 71 | -56 | " (1) | " (8) | 0.01 | 0.81 | -3.8 | -0.9 | -0.7 |
| Comp. Ex. 3 | " | " | 16 | 7 | -56 | " (1) | " (9) | 0.02 | 0.75 | -4.5 | -1.0 | -0.7 |
| Comp. Ex. 4 | " | " | 51 | 21 | -59 | " (1) | " (9) | 0.02 | 0.90 | -5.2 | -1.4 | -0.9 |
| Comp. Ex. 5 | " | " | 180 | 75 | -58 | " (1) | " (10) | 0.02 | 0.95 | -5.5 | -1.5 | -1.0 |
| Comp. Ex. 6 | " | " | 73 | 31 | -58 | " (1) | " (11) | 0.02 | 1.02 | -6.5 | -2.1 | -1.2 |
| Comp. Ex. 7 | separation | separation | — | — | — | — | — | — | — | — | — | — |
| Comp. Ex. 8 | " | " | — | — | — | — | — | — | — | — | — | — |
| Comp. Ex. 9 | completely compatible | completely compatible | 140 | 68 | -51 | pale yellow, transparent (1) | brown, transparent (7) | 0.02 | 0.51 | -0.92 | -0.47 | -0.20 |
| Comp. Ex. 10 | " | " | 160 | 163 | + 2 | " (1) | yellow, transparent (2) | 0.02 | 0.02 | ±0.00 | ±0.00 | ±0.00 |

Table 2 (cont'd)

| | Test for hygroscopicity: weight (g) before test | Test for hygroscopicity: weight (g) after test | Test for hygroscopicity: weight increase (mg) | Test for electrical insulation properties: volume resistivity (Ωcm) |
|---|---|---|---|---|
| Ex. 1 | 10.0000 | 10.0231 | 23.1 | $2.1 \times 10^{10}$ |
| Ex. 2 | 10.0003 | 10.0201 | 19.8 | $5.2 \times 10^{10}$ |
| Ex. 3 | 10.0001 | 10.0624 | 62.3 | $8.1 \times 10^{9}$ |
| Ex. 4 | 10.0000 | 10.0927 | 92.7 | $9.2 \times 10^{9}$ |
| Ex. 5 | 10.0002 | 10.0240 | 23.8 | $2.3 \times 10^{10}$ |
| Ex. 6 | 10.0004 | 10.0309 | 30.7 | $1.9 \times 10^{10}$ |
| Ex. 7 | 10.0001 | 10.0710 | 70.9 | $8.3 \times 10^{9}$ |
| Ex. 8 | 10.0000 | 10.0815 | 81.5 | $7.6 \times 10^{9}$ |
| Ex. 9 | 10.0002 | 10.0194 | 19.4 | $5.3 \times 10^{10}$ |
| Ex. 10 | 10.0003 | 10.0982 | 97.9 | $7.4 \times 10^{9}$ |
| Comp. Ex. 1 | 10.0002 | 10.0228 | 22.6 | $2.4 \times 10^{10}$ |
| Comp. Ex. 2 | 10.0001 | 10.0199 | 19.8 | $5.5 \times 10^{10}$ |
| Comp. Ex. 3 | 10.0000 | 10.0630 | 63.0 | $8.5 \times 10^{9}$ |
| Comp. Ex. 4 | 10.0005 | 10.0931 | 92.6 | $9.6 \times 10^{9}$ |
| Comp. Ex. 5 | 10.0003 | 10.1213 | 121.0 | $9.8 \times 10^{9}$ |
| Comp. Ex. 6 | 10.0004 | 10.5281 | 527.7 | $2.6 \times 10^{9}$ |
| Comp. Ex. 7 | — | — | — | — |
| Comp. Ex. 8 | — | — | — | — |
| Comp. Ex. 9 | 10.0002 | 10.0190 | 18.8 | $5.4 \times 10^{10}$ |
| Comp. Ex. 10 | 10.0001 | 10.2103 | 210.2 | $8.2 \times 10^{9}$ |

## Claims

1. A refrigerator oil lubricant composition characterised in that it is free of chlorine-containing fluorocarbon refrigerants and in that it comprises (a) a polyoxyalkylene glycol ether having the formula (I)

$$R_1O(AO)_nR_2 \qquad (I)$$

wherein AO is one or more groups selected from the group consisting of

$$\begin{array}{c} CH_3 \\ | \\ -CH_2CHO-, \end{array}$$

$-CH_2CH_2O$ and $-CH_2O-$ and, in the case of two or more groups, they may together form a block copolymer or a random copolymer; n = p + q + r in which p is the average number of the groups represented by

$$\begin{array}{c} CH_3 \\ | \\ -CH_2CHO-, \end{array}$$

q is the average number of the groups represented by $-CH_2CH_2O-$, r is the average number of the groups represented by $-CH_2O-$, p is in the range of 1 to 80, q is in the range of 0 to 60, r is 0 or 1 and the relation $0 \leqq q/(p+q) \leqq 0.6$ holds; and $R_1$ and $R_2$ are each a hydrogen atom or a hydrocarbon group having 1 to 8 carbon atoms provided that they should not be simultaneously hydrogen atoms, and having a kinematic viscosity at 40°C in the range of 6 to 500 ($mm^2/s$) cSt; and (b) 0.01 to 25 parts by weight, based on 100 parts by weight of said polyoxyalkylene glycol ether, of a polyglycidyl ether compound prepared from a

dihydric or trihydric alcohol.

2. The composition as claimed in claim 1, characterised in that R1 and R2 are each independently selected from methyl, ethyl, 1-propyl, 1-butyl and 2-methyl-1-propyl; the kinematic viscosity of (a) ranges from 10 to 200 cSt. ($mm^2/s$) at 40°C; and the carbon number ratio of the alcohol part to the glycidyl ether part is 1.5 or more.

3. The composition as claimed in claim 1 or 2, characterised in that it comprises (a) and 0.5 to 5 parts by weight, based on 100 parts by weight of (a), of (b).

4. A refrigerator oil composition characterised in that it is free of chlorine-containing fluorocarbon refrigerants and in that it comprises a fluorocarbon-based refrigerant containing no chlorine and the lubricant composition as defined in claim 1 at a weight ratio of 1:99 to 99:1.

5. The composition as claimed in claim 4, characterised in that the refrigerant is selected from the group consisting of 1,1,2,2-tetrafluoroethane, 1,1,1,2-tetrafluoroethane, 1,1,2-trifluoroethane, 1,1,1-trifluoroethane, 1,2-difluoroethane and 1,1-difluoroethane.

## Patentansprüche

1. Schmiermittelgemisch für Kältemittel, dadurch **gekennzeichnet**, daß es frei ist von chlorhaltigen Fluorkohlenstoffkältemitteln und folgende Komponenten umfaßt:
   a) einen Polyoxyalkylenglycolether der Formel I

$$R_1O(AO)_nR_2$$

   worin AO eine oder mehrere Gruppen darstellt, ausgewählt aus der Gruppe, bestehend aus

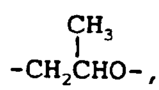

   $-CH_2CH_2O-$ und $-CH_2O-$ und im Falle zweier oder mehrerer Gruppen diese zusammen ein Block-Random-Copolymer bilden können,
   $n = p + q + r$, wobei p die durchschnittliche Zahl der Gruppen

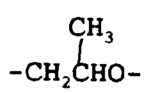

   bedeutet, q die durchschnittliche Zahl der Gruppen $-CH_2CH_2O-$ bedeutet, r die durchschnittliche Zahl der Gruppen $-CH_2O-$ bedeutet, p in einem Bereich von 1 bis 80 und q in einem Bereich von 0 bis 60 liegen, r 0 oder 1 bedeutet und die Beziehung $0 \leqq q/(p+q) \leqq 0{,}6$ gilt, und $R_1$ und $R_2$ jeweils ein Wasserstoffatom oder eine Kohlenwasserstoffgruppe mit 1 bis 8 C-Atomen bedeuten, mit der Maßgabe, daß sie nicht gleichzeitig Wasserstoffatome bedeuten dürfen, und der eine kinematische Viskosität bei 40°C im Bereich von 6 bis 500 cSt ($mm^2/s$) aufweist, und
   b) 0,01 bis 25 Gew.-Teile einer aus einem zwei- oder dreiwertigen Alkohol hergestellten Polyglycidyletherverbindung, bezogen auf 100 Gew.-Teile des Polyoxyalkylenglycolethers.

2. Gemisch nach Anspruch 1, dadurch **gekennzeichnet**, daß $R_1$ und $R_2$ jeweils unabhängig voneinander Methyl, Ethyl, 1-Propyl, 1-Butyl und 2-Methyl-1-propyl bedeuten, die kinematische Viskosität von a) sich zwischen 10 und 200 cSt ($mm^2/s$) bei 40°C bewegt und das Verhältnis der Zahl der C-Atome des Alkoholteils zum Glycidyletherteil 1,5 oder mehr beträgt.

3. Gemisch nach Anspruch 1 oder 2, dadurch **gekennzeichnet**, daß es die Komponente a) und 0,5 bis 5 Gew.-Teile b), bezogen auf 100 Gew.-Teile a), enthält.

4. Kältemittelölgemisch, dadurch **gekennzeichnet**, daß es frei ist von chlorhaltigen Fluorkohlenstoffkältemitteln und ein chlorfreies Fluorkohlenstoffkältemittel sowie das Schmiermittelgemisch nach Anspruch

1 bei einem Gewichtsverhältnis von 1:99 bis 99:1 umfaßt.

5. Gemisch nach Anspruch 4, dadurch **gekennzeichnet**, daß das Kältemittel ausgewählt ist unter der Gruppe, bestehend aus 1,1,2,2-Tetrafluorethan, 1,1,1,2-Tetrafluorethan, 1,1,2-Trifluorethan, 1,1,1-Trifluorethan, 1,2-Difluorethan und 1,1-Difluorethan.

## Revendications

1. Composition lubrifiante d'huile pour réfrigérateur, caractérisée en ce qu'elle est exempte de réfrigérants fluorocarbonés contenant du chlore et en ce qu'elle comprend (a) un polyoxyalkylène glycol éther ayant la formule :

$$R_1O(AO)_nR_2 \qquad (I)$$

dans laquelle :
AO est un ou plusieurs groupes choisis dans le groupe consistant en

$$\begin{array}{c} CH_3 \\ | \\ -CH_2CHO-, \end{array}$$

$-CH_2CH_2O-$ et $-CH_2O-$ et, dans le cas de deux ou plusieurs groupes, ils peuvent former ensemble un copolymère bloc ou un copolymère aléatoire;
n = p + q + r, dans lequel p est le nombre moyen des groupes représentés par

$$\begin{array}{c} CH_3 \\ | \\ -CH_2CHO-, \end{array}$$

q est le nombre moyen des groupes représentés par $-CH_2CH_2O-$, r est le nombre moyen des groupes représentés par $-CH_2O-$, p est dans la gamme de 1 à 80, q est dans la gamme de 0 à 60, r est 0 ou 1 et la relation $0 \leqq q/(p+q) \leqq 0,6$ est satisfaite; et
$R_1$ et $R_2$ sont chacun un atome d'hydrogène ou un groupe hydrocarboné ayant 1 à 8 atomes de carbone à condition qu'ils ne soient pas simultanément des atomes de carbone, et ayant une viscosité cinématique à 40°C dans la gamme de 6 à 500 ($mm^2/s$) cSt; et (b) 0,01 à 25 parties en poids pour 100 parties en poids de ce polyoxyalkylène glycol éther, d'un composé éther polyglycidylique préparé à partir d'un alcool dihydrique ou trihydrique.

2. Composition suivant la revendication 1, caractérisée en ce que $R_1$ et $R_2$ sont chacun indépendamment choisis parmi les groupes méthyle, éthyle, 1-propyle, 1-butyle et 2-méthyl- 1-propyle; la viscosité cinématique de (a) est dans la gamm de 10 à 200 cSt ($mm^2/s$) à 40°C; et le rapport du nombre de carbone de la partie alcool à la partie éther glycidylique est de 1,5 ou plus.

3. Composition suivant les revendications 1 ou 2, caractérisée en ce qu'elle comprend (a) et 0,5 à 5 parties en poids de (b) pour 100 parties en poids de (a).

4. Composition d'huile pour réfrigérateur, caractérisée en ce qu'elle est exempte de réfrigérants fluorocarbonés contenant du chlore et qu'elle comprend un réfrigérant à base de fluorocarbure ne contenant pas de chlore et la composition lubrifiante suivant la revendication 1 selon un rapport en poids de 1:99 à 99:1.

5. Composition suivant la revendication 4, caractérisée en ce que le réfrigérant est choisi dans le groupe consistant en 1,1,2,2,-tétrafluoroéthane, 1,1,1,2,-tétrafluoroéthane, 1,1,2-trifluoroéthane, 1,1,1-trifluoroéthane, 1,2,-difluoroéthane et 1,1-difluoroéthane.